# EUROPEAN PATENT APPLICATION

(11) **EP 1 808 328 A2**
(43) Date of publication of application: **18.07.2007**
(21) Application number: 07000614.3
(22) Date of filing: 12.01.2007
(51) Int. Cl.: B60L 11/18

(54) **Fuel cell system and method for controlling a fuel cell**

(30) Priority: 12.01.2006 JP 2006004745
(71) Applicant: YAMAHA HATSUDOKI KABUSHIKI KAISHA, Iwata-shi, Shizuoka 438-8501 (JP)
(72) Inventor: Kurosawa, Atsushi, c/o Yamaha Hatsudoki K. K., Iwata-shi, Shizuoka-ken 438-8501 (JP)
(74) Representative: Grünecker, Kinkeldey, Stockmair & Schwanhäusser Anwaltssozietät

(57) **Abstract**

The present invention relates to a method of controlling a fuel cell system of a vehicle, in particular of a straddle-type vehicle, said fuel cell system generating electrical power by making hydrogen gas supplied from a hydrogen container via a hydrogen supplying delivery pipe and oxygen gas to react with each other for operating an operating device, said method comprising the steps of determining a stop condition of the operating device, electrically disconnecting the operating device from the fuel cell, closing an opening/closing valve provided in the hydrogen supplying delivery pipe, continue generation of electrical power by providing hydrogen residing in the hydrogen supplying delivery pipe in a downstream portion of the opening and closing valve to the fuel cell to react with oxygen.

## Description

The present invention relates to a fuel cell system, in particular a fuel cell system including a fuel cell and a secondary battery and also relates to an electric vehicle having the fuel cell system, and a method for controlling the fuel cell.

Conventionally, some vehicles run using electric power generated by a fuel cell. There are, in those vehicles, motorcycles, and electric bicycles using the electric power generated by the fuel cell as the major power or as assisting power (for example, see Patent Document 1). In this electric bicycle, a hydrogen cylinder and a fuel cell are connected to each other through a conduit having a pressure adjuster. By opening the pressure adjuster, hydrogen gases of the hydrogen cylinder can be supplied to the fuel cell. Also, outside air is pressurized to the fuel cell by a fan. Oxygen in the air sent from the outside and the hydrogen gases sent from the hydrogen cylinder react with each other in the fuel cell to generate electric power. When the entire hydrogen in the hydrogen cylinder is exhausted, the empty hydrogen cylinder is exchanged for a new hydrogen cylinder.
Patent Document 1: JP-A-Hei 8-119180

However, in the conventional electric bicycle described above, if some hydrogen gases reside within the hydrogen cylinder or within the conduit when the hydrogen cylinder whose hydrogen has been consumed is exchanged to the new hydrogen cylinder, the residual hydrogen gases may be discharged outside. Therefore, the entire hydrogen gases are not able to be used for generating the electric power and some of them can be wasted. In order to avoid the waste of the hydrogen gases, the hydrogen gases within the hydrogen cylinder need to be completely exhausted. The exchange time of the hydrogen cylinder can be limited, accordingly.

The present invention is made to solve the problems described above, and an object thereof is to provide a fuel cell system whose hydrogen cylinder can be exchanged in a state in which hydrogen gases within a hydrogen cylinder is not exhausted without the hydrogen gases being discharged outside.

For the method aspect, this objective is solved in an inventive manner by a method of controlling a fuel cell system of a vehicle, in particular of a straddle-type vehicle, said fuel cell system generating electrical power by making hydrogen gas supplied from a hydrogen container via a hydrogen supplying delivery pipe and oxygen gas react with each other for operating an operating device, said method comprising the steps of: determining a stop condition of the operating device; electrically disconnecting the operating device from the fuel cell; closing an opening/closing valve provided in the hydrogen supplying delivery pipe; continue generation of electrical power by providing hydrogen residing in the hydrogen supplying delivery pipe in a downstream portion of the opening and closing valve to the fuel cell to react with oxygen.

For the apparatus aspect, this objective is solved in an inventive manner by a fuel cell system for a vehicle, in particular a straddle-type vehicle, comprising: a fuel cell configured to generate electric power for an operating device by making hydrogen gases supplied from a hydrogen cylinder through a hydrogen supplying delivery pipe and oxygen gases supplied from an oxygen supply device through an oxygen supplying delivery pipe react with each other; a secondary battery into which the electric power generated by the fuel cell is capable of being charged; a circulatory delivery pipe for returning hydrogen, which has been sent from the hydrogen cylinder to the fuel cell and has not reacted to the hydrogen supplying delivery pipe, from the fuel cell; wherein an opening and closing valve for selectively opening and closing the hydrogen supplying delivery pipe under control of a power supply system control device is positioned in an upstream portion of the hydrogen supplying delivery pipe located upstream more than a junction thereof with the circulatory delivery pipe such that, when the opening and closing valve is brought to a closing position under control of the power supply system control device, not-reacted hydrogen can be returned to the hydrogen supplying delivery pipe through the circulatory delivery pipe to be capable of being exhausted.

According to a preferred embodiment, the fuel cell system further comprises an attaching and detaching device positioned between the junction of the hydrogen supplying delivery pipe with the circulatory delivery pipe and the opening and closing valve so that the hydrogen cylinder is capable of being selectively attached to and detached from the fuel cell.

Preferably, the circulatory delivery pipe has a circulating pump operated under control of the power supply system control device to compulsively supply the not-reacted hydrogen within the circulatory delivery pipe from the hydrogen supplying delivery pipe to the fuel cell so as to make the fuel cell generate the electric power.

According to another preferred embodiment, the fuel cell system further comprises: a main switch arranged to make an ON-OFF control of an operation of the fuel cell in a normal mode; and an operating device switch arranged to switch an electrifying condition between the fuel cell and the operating device to a connected condition or to a disconnected condition, wherein, when the main switch is set to OFF, the operating device switch is set to OFF and the opening and closing valve is in the closing position under control of the power supply system control device so that the electric power generated using the not-reacted hydrogen supplied to the fuel cell through the circulatory delivery pipe is charged into the secondary battery.

According to yet another preferred embodiment, the fuel cell system further comprises: a voltage measuring device for measuring voltage of the fuel cell; wherein, after the main switch and the operating device switch are set to OFF and the electric power generated using the hydrogen supplied to the fuel cell through the circulatory delivery pipe is charged into the secondary battery and when an amount of voltage of the fuel cell measured by the voltage measuring device becomes lower than a predetermined threshold, an operation of the circulating pump stops and the fuel cell stops generating the electric power under control of the power supply system control device.

Preferably, the fuel cell system further comprises: a pressure measuring device positioned in a downstream portion of the hydrogen supplying delivery pipe located downstream more than the junction thereof with the circulatory delivery pipe, wherein, after the main switch and the operating device switch are set to OFF and the electric power generated using the hydrogen supplied to the fuel cell through the circulatory delivery pipe is charged into the secondary battery and when an amount of pressure within the hydrogen supplying delivery pipe measured by the pressure measuring device is lower than a predetermined threshold, an operation of the circulating pump stops and the fuel cell stops generating the electric power under control of the power supply system control device.

Further, preferably the fuel cell system further comprises: a secondary battery switch arranged to switch an electrifying condition between the fuel cell and the secondary battery to a connected condition or to a disconnected condition, wherein, when the operation of the circulating pump stops and the fuel cell stops generating the electric power that is charged into the secondary battery, the secondary battery switch is set to OFF under control of the power supply system control device.

There is further provided an electric vehicle having the fuel cell system according to one of the above embodiments.

In the following, the present invention is explained in greater detail with respect to several embodiments thereof in conjunction with the accompanying drawings, wherein:
- FIG. 1: is a side elevational view of a motorcycle having a fuel cell system configured in accordance with one embodiment,
- FIG. 2: is a block diagram of the fuel cell supply system,
- FIG. 3: is a flowchart showing a program that makes a fuel cell generate electric power, and
- FIG. 4: is a flowchart showing another program that makes a fuel cell configured in accordance with another embodiment, generate electric power.

### Description of Reference Numerals:

10: motorcycle
25: fuel cell
26: secondary battery
31: hydrogen cylinder
31a: connector
32a, 32b: gas delivery pipe
33: main shutting valve
34a: pressure sensor
34b: circulating pump
36: air filter
37: air blower
38a, 38b: gas delivery pipe
43: drive motor
50: power supply system control device
54: wiring
S: fuel cell system
SW: main switch
SW1, SW2: opening and closing switch

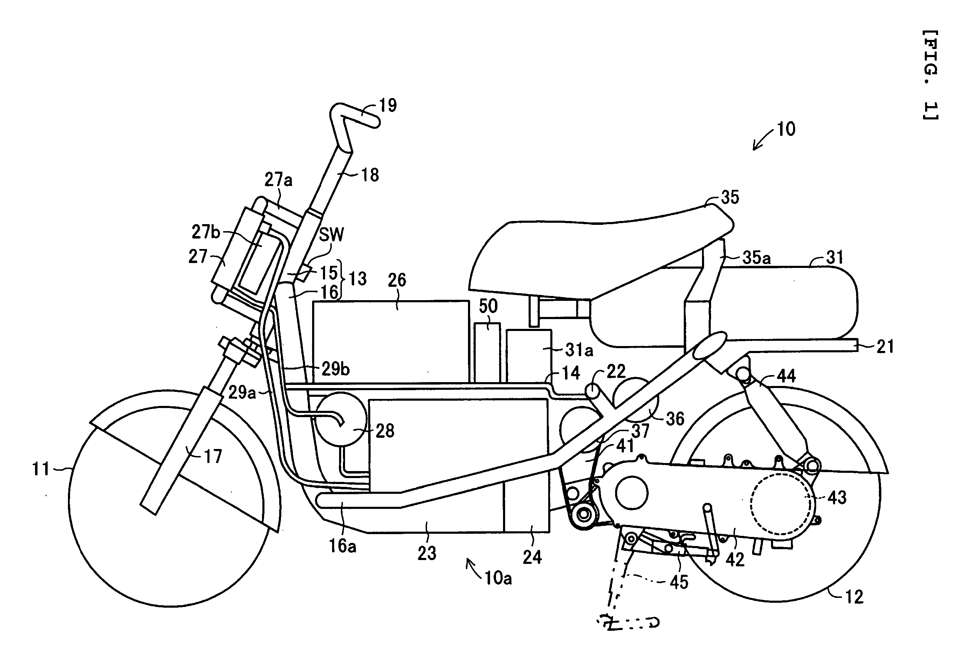

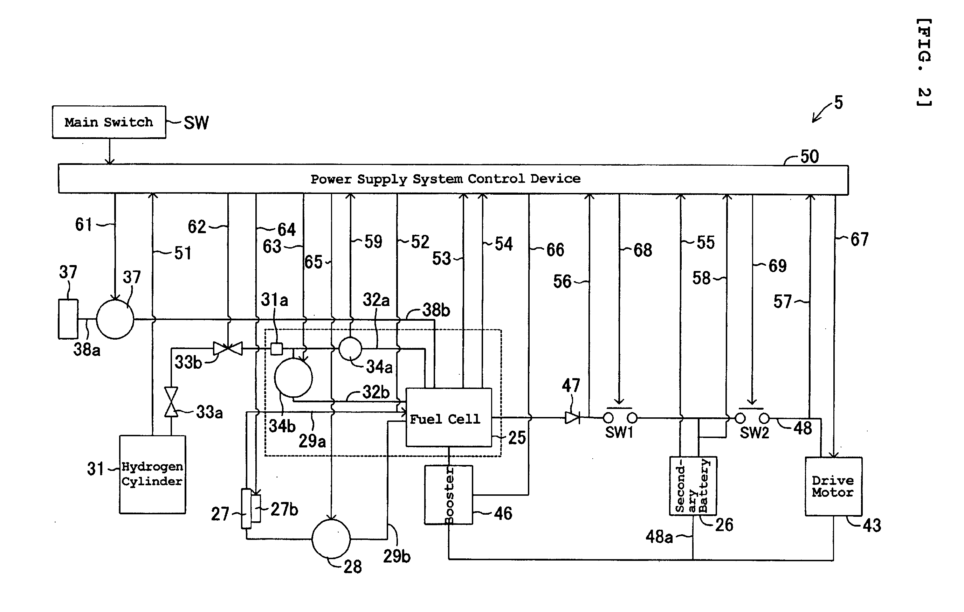

Hereunder, a fuel cell system configured in accordance with one embodiment will be described in detail with reference to drawings. FIG. 1 shows a motorcycle 10 having the fuel cell system (see FIG. 2) of the embodiment. This motorcycle 10 includes a pair of wheels which are a front wheel 11 and a rear wheel 12 and a vehicle body 10a to which the pair of wheels are attached. The vehicle body 10a includes a vehicle body frame 13 forming the major part of the vehicle body 10a and a sub frame 14 detachably mounted to the vehicle body frame 13. The vehicle body frame 13 includes a head pipe 15 forming a front portion of the vehicle body 10a and a down tube 16 extending rearward from the head pipe 15.

The front wheel 11 is rotatably supported at bottom ends of a front fork 17 whose lower portion is bifurcated. That is, both of the bottom ends of the front fork 17 support the center shaft (not shown) of the front wheel 11 for rotation; thereby, the front wheel 11 is rotatable about an axis of the center shaft. A bottom end of a steering shaft 18 disposed within the head pipe 15 is coupled with a top end of the front fork 17. This steering shaft 18 is inserted into the head pipe 15 under a condition that the steering shaft 18 is pivotable about an axis of the head pipe 15. A top end of the steering shaft 18 protrudes from the head pipe 15 to extend upward.

Handle bars 19 extending generally horizontally are coupled with the top end of the steering shaft 18. Therefore, when the handle bars 19 are manipulated to pivot about an axis of the steering shaft 18, the front wheel 11 changes its direction rightward or leftward about an axis of the front fork 17 in accordance with a pivotal amount of the steering shaft 18. Each of right and left ends of the handle bars has a grip (not shown).

One of the grips is attached for pivotal movement about an axis thereof to form an accelerator for adjusting the drive power of a drive motor 43 described later, in addition to that the particular grip is used as a grip portion which is held by a hand. The other grip is fixed to the handle bars 19 to be used as another grip portion which is held by another hand. Brake levers (not shown) are disposed adjacent to the respective grips. The brake levers are urged to be spaced apart from the respective grips, and restrain the rotations of the front wheel 11 and the rear wheel 12 by being pulled toward the grips.

The down tube 16 is formed with a pair of main frames 16a (only one of them is shown) which bend, and front ends (top ends) thereof are coupled with both lateral sides of a bottom end portion of the head pipe 15. The respective main frames 16a extend obliquely downward and rearward from the portions coupled with the head pipe 15 while expanding distances therebetween, and then turn to extend horizontally rearward. Further, rear portions of the respective main frames 16a extend obliquely rearward and upward while keeping the distances therebetween. Rear ends of the respective main frames 16a are coupled with a plate-like attaching member 21 extending horizontally.

A cross member 22 extends between top surfaces of the rear portions of the respective main frames 16a. Each end portion of the cross member 22 generally turns at a right angle to configure a generally C-shaped bar. Turning ends are coupled with the respective main frames 16a so that a body portion protrudes upward from both of the main frames 16a. A positioning base 23 extends between bottom ends of the respective main frames 16a to protrude downward at a location between the main frames 16a. A top surface of the positioning base 23 is formed as a recess. A fuel cell container 24 is placed at the recess. A fuel cell 25 (see FIG. 2) is contained in the interior of the fuel cell container 24.

The sub frame 14, which has a plate-like shape, is mounted between front portions of the respective main frames 16a forming the down tube 16 and the cross member 22 extending between the rear portions of the respective main frames 16a. A secondary battery 26 which is formed with a lithium ion battery is fixed to a top surface of a front portion positioned slightly forward more than a center portion of the sub frame 14. A power supply system control device 50 for controlling respective devices provided to the fuel cell system S is fixed to a top surface of a rear portion of the sub frame 14.

A radiator 27 is attached to a front portion of the head pipe 15 via attaching members 27a. A fan 27b for cooling the radiator by air is attached to a rear side of the radiator 27 (between the radiator 27 and the head pipe 15). A water pump 28 is attached to a portion positioned in front of the fuel cell container 24 in the front portion of the down tube 16 and also positioned lower than the sub frame 14 (the secondary battery 26). The radiator 27 and the fuel cell 25 are connected to each other by a cooling water delivery pipe 29a through which cooling water flows from the fuel cell 25 to the radiator 27. The cooling water delivery pipe 29a extends from the fuel cell 25 to the radiator 27 via a front surface of the fuel cell container 24.

Another cooling water delivery pipe 29b extends from the radiator 27 to the water pump 28 through which the cooling water flows from the radiator 27 to the fuel cell 25. The cooling water delivery pipe 29b further extends from the water pump 28 to the fuel cell container 24 and enters the interior from a front surface of the fuel cell container 24 to be connected to the fuel cell 25. Because of this arrangement, when the water pump 28 operates, the cooling water in the radiator 27 is delivered to the fuel cell 25 through the cooling water delivery pipe 29b to cool the fuel cell 25. Then, the cooling water absorbing the heat by cooling the fuel cell 25 is returned to the radiator 27 through the cooling water delivery pipe 29a and is cooled by the fan 27b while passing through the radiator 27.

A hydrogen cylinder 31 which is filled with hydrogen to be supplied to the fuel cell 25 is attached to a top surface of an attaching member 21 coupled with rear end portions of the respective main frames 16a. The hydrogen cylinder 31 is connected to the fuel cell 25 through a connector 31a which functions as an attaching and detaching device of the present embodiment. As shown in FIG. 2, the hydrogen cylinder 31 is connected to a hydrogen gas supply port of the fuel cell 25 through a gas delivery pipe 32a which functions as a hydrogen supplying delivery pipe of the present embodiment. The connector 31a is positioned in this gas delivery pipe 32a. Also, a hydrogen gas discharge port of the fuel cell 25 is connected to a downstream portion of the gas delivery pipe 32a located adjacent to the connector 31a and downstream more than the connector 31a through a gas delivery pipe 32b which functions as a circulatory delivery pipe 32b.

A fundamental valve 33a with which the gas delivery pipe 32a is manually opened or closed is positioned at a portion of the gas delivery pipe 32a located closer to the hydrogen cylinder 31. A main shutting valve 33b functioning as an opening and closing valve of the present embodiment is positioned at another portion located downstream more than the fundamental valve 33a. A pressure sensor 34a functioning as a pressure measuring device of the present embodiment that measures pressure of the hydrogen gases within the gas delivery pipe 32a is positioned at a downstream portion of the gas delivery pipe 32a located downstream more than the junction with the gas delivery pipe 32b. A circulating pump 34b for returning the hydrogen gases discharged from the hydrogen gas discharge port of the fuel cell 25 is positioned in the gas delivery pipe 32b.

Therefore, by bringing the fundamental valve 33a and the main shutting valve 33b to their opening positions, the hydrogen gases within the hydrogen cylinder 31 can be supplied to the fuel cell 25 through the gas delivery pipe 32a. Also, by operating the circulating pump 34b under the condition, the hydrogen gases residing in the fuel cell 31 without reacting can be returned to the gas delivery pipe 32a through the gas delivery pipe 32b so as to be joined with the hydrogen gases newly sent out to the gas delivery pipe 32a from the hydrogen cylinder 31. The hydrogen gases circulate through the gas deliver pipes 32a, 32b until they react with the oxygen gases in the fuel cell 25. A seat 35 is disposed at a top portion of a front section of the hydrogen cylinder 31. This seat 35 is coupled with the rear portions of the respective main frames 16a via support members 35a.

An air filter 36 is placed at a location rearward of the cross member 22 in the rear portions of the main frames 16a and is attached thereto. An air blower 37 is placed at a location in front of the cross member 22 in the rear portions of the main frames 16a and is attached thereto. Additionally, positioning bases (not shown) are disposed between the respective main frames 16a in the rear portions of the main frames 16a. The air filter 36 and the air blower 37 are fixed to the down tube 16 via the positioning bases.

The air filter 36 and the air blower 37 and also the air blower 37 and the fuel cell 25 are connected to each other counterpart through gas delivery pipes 38a, 38b shown in FIG. 2, respectively. Outside air is sucked in by the operation of the air blower 37 through the air filter 36 to be introduced into the fuel cell 25. Foreign substances are removed when the air sucked into the air filter 36 passes through the air filter 36. The air filter 36 and the air blower 37 together form an oxygen supply device of the present embodiment. A rear arm (not shown) formed with a pair of arm members extending rearward is coupled with lower sections of the rear portions of the respective main frames 16a through a coupling unit 41.

Rear end portions of the respective arm members of the rear arm rotatably support lateral side portions of a center shaft of the rear wheel 12; thereby, the rear wheel 12 is rotatable about an axis of the center shaft. A motor unit 42 is mounted to an outer surface of one of the arm members of the rear arm in such a manner that the motor unit 42 covers the arm member. Within the motor unit 42, the drive motor 43 and a reduction gear, both of which function as an operating device of the present embodiment that operates by the electric power generated by the fuel cell 25 are contained. The operation of the drive motor 43 rotates the rear wheel 12 so that the motorcycle 10 runs.

Rear cushions 44 extend between the rear end portions of the respective main frames 16a and top rear ends of the rear arm. The rear ends of the rear arm are swingable with the telescopic movement of the rear cushions 44. A drum brake (not shown) is attached to an inner surface of the motor unit 42. The drive motor 43 operates in accordance with an operative amount of the grip under control of the power supply system control device 50 so that the rear wheel 12 automatically generates the drive force.

This motorcycle 10 has a rotary stand 45 for keeping the motorcycle 10 in a standing state under a stop condition thereof. The stand 45 is raised when the motorcycle 10 runs as indicated by the actual line of FIG. 1, while the stand 45 is lowered to support the motorcycle 10 when the motorcycle 10 stays under the stop condition as indicated by the chain double-dashed line of FIG. 1.

The fuel cell system S includes a booster 46 for boosting voltage generated by the fuel cell 25 and a diode 47 for preventing current from flowing back. The fuel cell 25, the secondary battery 26, the drive motor 43, the booster 46, the diode 47 and wirings connecting them to each other together form an electric circuit 48. An opening and closing switch SW1 functioning as a secondary battery switch of the present embodiment is disposed between the fuel cell 25 and the secondary battery 26 in the electric circuit 48, while another opening and closing switch SW2 functioning as an operating device switch of the present embodiment is disposed between the fuel cell 25 and the drive motor 43.

Although not shown, the respective devices forming the fuel cell system S has various sensors for detecting various conditions of the devices. Electric wirings connect the sensors and the power supply system control device 50 therebetween. That is, the hydrogen cylinder 31 has a residual amount detecting sensor for detecting a residual amount of the hydrogen within the hydrogen cylinder 31. The cooling water delivery pipe 29a has a temperature sensor for detecting a temperature of the cooling water that is delivered from the radiator 27 to the fuel cell and is returned from the fuel cell 25 to the radiator 27 after cooling the fuel cell 25.

The fuel cell 25 has a temperature sensor for detecting a temperature of the fuel cell 25 and a voltage sensor for detecting an amount of voltage of the fuel cell 25. The secondary battery 26 has another temperature sensor for detecting a temperature of the secondary battery 26. The electric circuit 48 has a current sensor for detecting an amount of current that flows through the electric circuit 48 and another current sensor for detecting an amount of current that flows through the drive motor 43 and an amount of voltage. The wiring 48a connected to the secondary battery 26 in the electric circuit 48 has a further current sensor for detecting an amount of current that flows through the secondary battery 26.

The respective sensors are connected to the power supply system control device 50 through the respective wirings 51, 52, 53, 54, 55, 56, 57, 58 and send amounts detected thereby to the power supply system control device 50 as electric signals. The pressure sensor 34a and the power supply system control device 50 are connected to each other through a wiring 59. Additionally, the voltage sensor and the wiring 54 together form a voltage measuring device of the present embodiment.

Wirings 61, 62, 63, 64, 65, 66, 67, 68, 69 for sending command signals from the power supply system control device 50 to the air blower 37, the main shutting valve 33b, the circulating pump 34, the fan 27b, the water pump 28, the booster 46, the drive motor 43, the opening and closing switch SW1 and the opening and closing switch SW2 connect the power supply system control device 50 to the corresponding devices therebetween. The air blower 37 operates in response to a flow amount command signal from the power supply system control device 50 to supply air to the fuel cell 25. The main shutting valve 33b selectively moves to the opening position and the closing position thereof in response to an opening and closing command signal from the power supply system control device 50 to supply hydrogen gases from the hydrogen cylinder 31 to the fuel cell 25.

The fuel cell 25 makes the oxygen in the air supplied from the air blower 37 and hydrogen supplied from the hydrogen cylinder 31 react with each other to generate electricity as well as water. The booster 46 boosts the electricity generated by the fuel cell 25 in response to a voltage command signal from the power supply system control device 50 to send the electricity to the drive motor 43 and also to send it to the secondary battery 26 to charge the secondary battery 26. The circulating pump 34b operates in response to an operation command signal from the power supply system control device 50 to return the hydrogen gases that have not reacted with the oxygen gases in the fuel cell 25 to the gas delivery pipe 32a through the gas delivery pipe 32b so that the hydrogen gases join with the hydrogen gases that are newly sent out to the gas delivery pipe 32a.

The water pump 28 operates in response to an operation command signal from the power supply system control device 50 to circulate the cooling water between the radiator 27 and the fuel cell 25 to keep the temperature of the fuel cell 25 at a predetermined temperature. The fan 27b operates in response to an operation command signal from the power supply system control device 50 to cool the radiator by air. The drive motor 43 receives an operation signal generated in accordance with an operational amount of the grip that forms the accelerator to operate in response to the operation signal.

The opening and closing switch SW1 switches an electrifying condition between the fuel cell 25 and a point between the secondary battery 26 and the drive motor 43 to a connected condition or to a disconnected condition in response to the opening and closing command signal from the power supply system control device 50. Also, the opening and closing switch SW2 switches the electrifying condition between the fuel cell 25 and the drive motor 43 to a connected condition or to a disconnected condition in response to the opening and closing command signal from the power supply system control device 50. The secondary battery 26 is approprietry charged with electric power generated by the fuel cell 25 and discharges it to the drive motor 43 as auxiliary power source as necessary.

The power supply system control device 50 has a CPU, RAMs, ROMs, a timer and so forth. Various programs and data such as, for example, maps which are previously prepared are stored into the ROMs. The CPU controls the drive motor 43, the main shutting valve 33b, the air blower 37, the water pump 28, etc. based upon the operation of the grip or the like by the rider or the programs, etc. which are previously prepared. In addition, this motorcycle 10 has a power switch (not shown) and a main switch SW.

In this construction, when the rider drives the motorcycle 10, the rider, first, straddles the seat 35 to sit thereon. Then, the rider operates the power switch and the main switch SW to bring them to the ON conditions. Thereby, air is supplied from the air blower 37 and the hydrogen is supplied from the hydrogen cylinder 31 both to the fuel cell 25. The fuel cell 25 makes the oxygen in the air and the hydrogen which is supplied thereto reacts with each other to generate electricity. On this occasion, the operation of the water pump 28 delivers the cooling water from the radiator 27 to the fuel cell 25 to cool the fuel cell 25 so as to keep it at the predetermined temperature. The fuel cell 25 discharges the water generated by the reaction of the oxygen and the hydrogen together with the exhaust air.

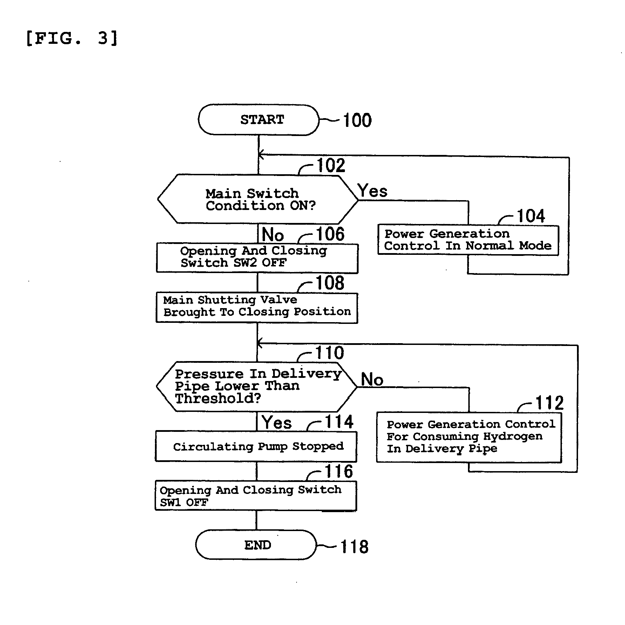

On this occasion, the power supply system control device 50 executes the program shown by the flowchart of FIG. 3 to have the fuel cell 25 make the power generation. The program for making the fuel cell 25 generate electric power is stored in the ROMs and is repeatedly executed at predetermined intervals by the CPU after the power switch is brought to the ON condition. The program first starts at a step 100 and goes to a step 102 to determine whether the main switch SW is in the ON condition or not. Because the main switch SW is set to ON at this moment, the determination "YES" is made and the program goes to a step 104.

At the step 104, a power generation control of a normal mode is made. In this process, operations of FC auxiliary devices (the air blower 37, the main shutting valve 33b, the water pump 28, etc.) for making the fuel cell 25 operate are controlled. This process is executed by the CPU based upon an operational amount of the grip operated by the rider and a preset map previously prepared and stored in the ROMs. Then, the program goes to the step 102 again to determine whether the main switch is in the ON state or not. If the main switch SW is not operated to OFF and remain in the ON state, the determination "YES" is made. The program goes to the step 104 to make the fuel cell 25 continue the power generation.

The processes at the steps 102, 104 are repeated until the main switch SW is set to OFF and the determination "NO" is made at the step 102. During the period, the processes for making the fuel cell 25 generate the electric power are made, and the drive motor 43 operates by the power generation and the motorcycle 10 runs. Also, during the period in which the processes are made, the motorcycle 10 repeats acceleration and deceleration in response to the operation of the grip. If the running speed of the motorcycle 10 needs to be lowered, the brake levers are operated in accordance with the necessity. Thereby, the motorcycle 10 reduces its speed in response to the operation amounts of the brake levers.

In order to bring the motorcycle 10 to a stop condition, the main switch SW is set to OFF and the determination "NO" is made at the step 102. The program thus goes to a step 106 to set the opening and closing switch SW2 to be set to OFF. Thereby, the power supply to the drive motor 43 from the fuel cell 25 is stopped. The program then goes to a step 108 to bring the main shutting valve 33b to the closing position. Thereby, the hydrogen gas supply from the hydrogen cylinder 31 to the fuel cell 25 is stopped. When the rider wants to finish driving the motorcycle 10, the rider pivots the stand 45 downward to make it touch the ground. Thereby, the motorcycle 10 stays in the standing state.

Next, the program goes to a step 110 to determine whether the pressure of the hydrogen gases within the gas delivery pipe 32a detected by the pressure sensor 34a is lower than the predetermined threshold or not. This threshold is previously set and stored in the RAMs. For example, the threshold is set to the same pressure amount as the atmospheric pressure amount. At this moment, if the pressure in the gas delivery pipe 32a is higher than the threshold and the determination "NO" is made, the program goes to a step 112 to make the fuel cell 25 further generate the electric power. For this power generation on this occasion, the hydrogen gases residing in the portion of the gas delivery pipe 32a, which is closed by the main shutting valve 33b, the portion being located downstream more than the main shutting valve 33b, and also residing in the interior of the gas delivery pipe 32b are used. The electric power generated by the fuel cell 25 is charged into the secondary battery 26.

The program goes to the step 110 to again determine whether the pressure of the hydrogen gases within the gas delivery pipe 32a is lower than the threshold or not. At this moment, if the pressure of the hydrogen gases within the gas delivery pipe 32a is still higher than the threshold and the determination "NO" is made, the program goes to the step 112 to further make the fuel cell 25 generate the electric power. The processes at the steps 110, 112 are repeated until the pressure in the gas delivery pipe 32a becomes lower than the threshold. During the period, the generated power is charged into the secondary battery 26. The density of the hydrogen gases residing in the downstream portion of the gas delivery pipe 32a located downstream more than the main shutting valve 33b and in the interior of the gas delivery pipe 32b gradually becomes thinner.

When the pressure of the hydrogen gases within the gas delivery pipe 32a becomes lower than the threshold and the determination "YES" is made, the program goes to a step 114. At the step 114, the circulating pump 34b is stopped. Thereby, the circulation of the hydrogen gases residing in the downstream portion of the gas delivery pipe 32a located downstream more than the main shutting valve 33b and in the interior of the gas delivery pipe 32b is stopped and the power generation by the fuel cell 25 is also stopped. The program then goes to a step 116 to set the opening and closing switch SW1 to OFF.

Thereby, the power charge from the fuel cell 25 to the secondary battery 26 is stopped. The program then goes to a step 118 to end. When the operation of the fuel cell system S needs to be stopped, the power switch is brought to the OFF condition. Also, when the residual amount of the hydrogen gases within the hydrogen cylinder 31 reduces and the hydrogen cylinder 31 needs to be exchanged for a new hydrogen cylinder 31 which is filled with the hydrogen gases, the connector 31a is detached under a condition that the fundamental valve 33a and the main shutting valve 33b are placed at the closing positions.

The hydrogen cylinder 31 is detached from the attaching member 31, and the new hydrogen cylinder 31 is attached to the attaching member 21. Then, a connecting section of the hydrogen cylinder 31 which is attached is coupled with the connector 31a. On this occasion, even though some hydrogen gases reside within the hydrogen cylinder 31 that has been used, the hydrogen gases residing inside do not run out because the hydrogen cylinder 31 is closed by the fundamental valve 33a and the main shutting valve 33b. Also, because no hydrogen gases reside in the downstream portion of the gas delivery pipe 32a located downstream more than the main shutting valve 33b and in the interior of the gas delivery pipe 32b, the hydrogen gases do not leak even though the gas delivery pipe 32a is open.

As thus described, in the fuel cell system S of this embodiment, a downstream end of the gas delivery pipe 32b provided for returning the hydrogen gases which have not reacted with the oxygen gases in the fuel cell 25 and have been discharged from the fuel cell 25 in the not-reacted state is joined with the portion of the gas delivery pipe 32a, which is provided for supplying the hydrogen gases from the hydrogen cylinder 31 to the fuel cell 25, the portion being located downstream more than the main shutting valve 33b. Accordingly, by bringing the main shutting valve 33b to the closing position, the anode closing circulating system in which the downstream portion of the gas delivery pipe 32a located downstream more than the main shutting valve 33b and the gas delivery pipe 32b communicate with each other can be formed.

Therefore, by repeatedly sending the hydrogen gases to the fuel cell 25 to make them react with oxygen gases until the hydrogen gases residing in the downstream portion of the gas delivery pipe 32a located downstream more than the main shutting valve 33b and in the interior of the gas delivery pipe 32b are almost exhausted, the not-reacted hydrogen gases can be exhausted for generating the electric power. Also, in the fuel cell system S according to the present invention, the connector 31a is positioned between the junction of the gas delivery pipe 32a with the gas delivery pipe 32b and the main shutting valve 33b so that the hydrogen cylinder 31 can be selectively attached to and detached from the fuel cell 25.

Thus, even though the hydrogen gases within the hydrogen cylinder are not completely exhausted, the fundamental valve 33a and the main shutting valve 33b can be brought to the closing positions at a proper and convenient time and the hydrogen cylinder 31 can be exchanged for new one. On this occasion, the hydrogen gases residing in the hydrogen cylinder 31 can be used together with the hydrogen gases newly charged into the hydrogen cylinder 31, while the hydrogen gases residing in the downstream portion of the gas delivery pipe 32a located downstream more than the main shutting valve 33b and in the interior of the gas delivery pipe 32b can be almost used for generating the electric power. As a result, the hydrogen gases are not wasted. Also, the fuel cell system is convenient because the exchange time of the hydrogen cylinder 31 can be decided with much time.

The gas delivery pipe 32b has a circulating pump 34b to compulsively supply the not-reacted hydrogen gases from the gas delivery pipe 32b to the fuel cell 25 through the gas delivery pipe 32a so as to make the fuel cell 25 generate the electric power. Thereby, the not-reacted hydrogen gases can be effectively circulated. The power generation that is not wasted thus can be made in a short time period and efficiently. Also, in the fuel cell system S, when the main switch is set to OFF, the opening and closing switch SW2 is set to OFF. Thus, the power supply to the drive motor 43 is stopped and the main shutting valve 33b is brought to the closing position so that the electric power generated using the not-reacted hydrogen supplied to the fuel cell 25 through the gas delivery pipe 32b is charged into the secondary battery 26.

Therefore, no hydrogen gases are newly supplied to the fuel cell 25 from the hydrogen cylinder 31, and the not-reacted hydrogen gases residing in the downstream portion of the gas delivery pipe 32a located downstream more than the main shutting valve 33b and in the gas delivery pipe 32b are used for generating the electric power that is charged into the secondary battery. The secondary battery 26 thus can be charged without wasting the hydrogen gases. The electric power charged into the secondary battery 26 is properly used as the auxiliary power of the fuel cell 25.

Also, the pressure sensor 34a is positioned in the downstream portion of the gas delivery pipe 32a located downstream more than the junction thereof with the gas delivery pipe 32b. When an amount of pressure within the gas delivery pipe 32a measured by the pressure sensor 34a is lower than the threshold, the operation of the circulating pump 34b stops and the fuel cell 25 also stops generating the electric power. Therefore, the fuel cell 25 continues to generate the electric power until the hydrogen gases residing in the downstream portion of the gas delivery pipe 32a located downstream more than the main shutting valve 33b and in the gas delivery pipe 32b becomes lower than the predetermined amount. The hydrogen gases are not wasted, accordingly. In addition, the circulating pump 34b can be prevented from continuously operating after the hydrogen gases are exhausted.

In the fuel cell system S, the opening and closing switch SW1 that switches the electrifying condition between the fuel cell 25 and the secondary battery 26 to a connected condition or to a disconnected condition is provided. When the operation of the circulating pump 34b stops, the opening and closing switch SW1 is set to OFF to stop the power supply from the fuel cell 25 to the secondary battery 26. Thus, upon the stop of the operation of the circulating pump 34b, the power generation by the fuel cell 25 can be stopped and also the power charge to the secondary battery 26 can be surely stopped. In addition, because the fuel cell system S is provided to the motorcycle 10, the motorcycle 10 in which the hydrogen cylinder 31 thereof can be exchanged for new one at a proper time without discharging the hydrogen gases outside even though the hydrogen gases within the hydrogen cylinder 31 is not exhausted can be obtained.

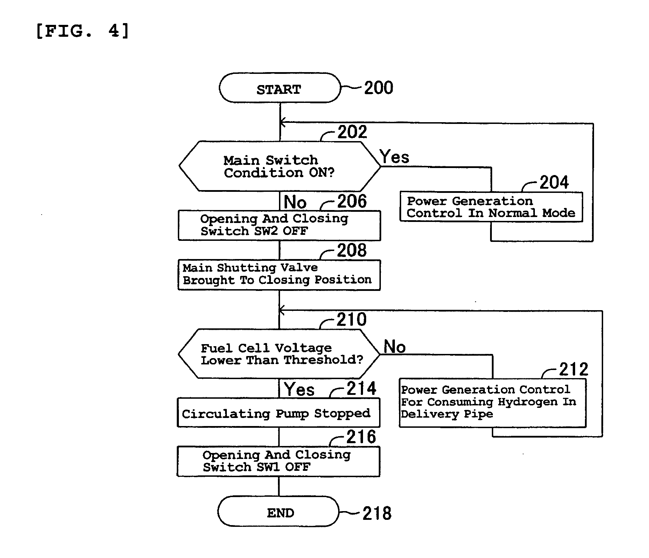

FIG. 4 shows another program for controlling the power generation by the fuel cell 25, modified in accordance with another embodiment. This program is also stored in the ROMs provided to the power supply system control device 50 and is repeatedly executed at predetermined intervals by the CPU after the power switch is brought to the ON condition. At steps 200-208 and 212-218 in this program, the same processes as the processes of the steps 100-108 and 112-118 in the program of FIG. 3 described above are executed.

That is, in this embodiment, instead of the process in which the determination whether the pressure of the hydrogen gases is lower than the preset threshold or not is made, executed at the step 110 in the embodiment described above, another process in which a determination whether an amount of voltage of the fuel cell 25 is lower than a predetermined threshold or not is made is executed at a step 210. This threshold is previously set and stored in the RAMs. For example, the threshold is set to three volts. If a voltage amount of the fuel cell 25 is higher than the threshold and the determination "NO" is made, the program goes to a step 212 to make the fuel cell 25 generate electric power.

Hereunder, the processes of the steps 210, 212 are repeated and the fuel cell 25 generates the electric power until the voltage amount of the fuel cell 25 is lower than the threshold and the determination "YES" is made at the step 210. For the power generation on this occasion, the hydrogen gases residing in the portion of the gas delivery pipe 32a, which is closed by the main shutting valve 33b and located downstream more than the main shutting valve 33b, and also residing in the interior of the gas delivery pipe 32b are used. The electric power generated by the fuel cell 25 is charged into the secondary battery 26. The program that determines "YES" at the step 210 goes to the step 214. Hereunder, the same processes as those of steps 114-118 described above are executed.

As thus described, according to this embodiment, when the voltage amount of the fuel cell 25 becomes lower than the threshold, the circulating pump 34b stops and the power generation by the fuel cell 25 also stops. The operation thus does not stop under a high voltage condition of the fuel cell 25. As a result, the fuel cell 25 can have a long life. Other actions and effects of this embodiment are the same as the actions and effects of the embodiment described above.

The fuel cell system of the present embodiments is not limited to the embodiments described above and can be properly modified to be carried out. For example, in the embodiments described above, the fuel cell system S is mounted to the motorcycle 10. However, devices to which this fuel cell system is applied are not limited to the motorcycle 10 and can include vehicles such as, for example, a three-wheeled motored vehicle and a four-wheeled motored vehicle and devices other than the vehicles which use electric power. Also, in the respective embodiments described above, the power generation by the fuel cell 25 is stopped when the pressure of the hydrogen gases within the gas delivery pipe 32a becomes lower than the atmospheric pressure or when the voltage amount of the fuel cell 25 becomes lower than three volts. However, the power generation by the fuel cell 25 can be stopped when the pressure in the gas delivery pipe 32a becomes lower than the atmospheric pressure and when the voltage amount of the fuel cell 25 becomes lower than three volts.

According to the alternatives, in a case that: a residual amount of the hydrogen gases in the downstream portion of the gas delivery pipe 32a located downstream more than the main shutting valve 33b and the gas delivery pipe 32b is larger than the predetermined amount although a voltage amount of the fuel cell 25 becomes lower than three volts; or a voltage amount of the fuel cell 25 is higher than three volts although a pressure amount in the gas delivery pipe 32a becomes lower than the atmospheric pressure, the fuel cell 25 still generates the electric power. Therefore, the hydrogen gases can be used without being wasted, while the fuel cell 25 keeping a long life. The respective thresholds in those cases can be set to amounts other than the atmospheric pressure and three volts. In addition, other components forming the fuel cell system of the present embodiments can be properly modified in the technical scope of the present embodiments.

The description above discloses (amongst others) that a constructive feature of the hybrid power supply system of the present embodiment is that the system includes a fuel cell configured to generate electric power by making hydrogen gases supplied from a hydrogen cylinder through a hydrogen supplying delivery pipe and oxygen gases supplied from an oxygen supply device through an oxygen supplying delivery pipe react with each other, an operating device operating by the electric power which the fuel cell generates, a secondary battery into which the electric power generated by the fuel cell is capable of being charged, a circulatory delivery pipe for returning the hydrogen which has been sent from the hydrogen cylinder to the fuel cell and has not reacted to the hydrogen supplying delivery pipe from the fuel cell, and a power supply system control device. An opening and closing valve for selectively opening and closing the hydrogen supplying delivery pipe under control of the power supply system control device is positioned in an upstream portion of the hydrogen supplying delivery pipe located upstream more than a junction thereof with the circulatory delivery pipe so that the not-reacted hydrogen returned to the hydrogen supplying delivery pipe through the circulatory delivery pipe is capable of being exhausted by the opening and closing valve being brought to a closing position under control of the power supply system control device, and an attaching and detaching device is positioned between the junction of the hydrogen supplying delivery pipe with the circulatory delivery pipe and the opening and closing valve so that the hydrogen cylinder is capable of being selectively attached to and detached from the fuel cell.

In the fuel cell system according to this embodiment, a downstream end of the circulatory delivery pipe provided for returning the hydrogen gases which have not reacted with the oxygen gases in the fuel cell and have been discharged from the fuel cell in the not-reacted state is joined with a predetermined portion of the hydrogen supplying delivery pipe provided for supplying the hydrogen gases from the hydrogen cylinder to the fuel cell. The opening and closing valve for selectively opening and closing the hydrogen supplying delivery pipe is positioned in the upstream portion of the hydrogen supplying delivery pipe located upstream more than the junction thereof with the circulatory delivery pipe. Accordingly, by bringing the opening and closing valve to a closing position, the so-called anode closing circulating system in which a downstream portion of the hydrogen supplying delivery pipe located downstream more than the opening and closing valve and the circulatory delivery pipe communicate with each other is formed.

Therefore, by repeatedly sending the hydrogen gases within the anode closing circulating system to the fuel cell to make them react with oxygen gases until the hydrogen gases are almost exhausted, the not-reacted hydrogen gases can be exhausted for generating the electric power. In this operation, because a portion of the hydrogen supplying delivery pipe located closer to the hydrogen cylinder is closed by the opening and closing valve, the hydrogen gases in the hydrogen cylinder and in the interior of the portion of the hydrogen supplying delivery pipe located closer to the hydrogen cylinder do not run out to the anode closing circulating system or outside.

Further, in the fuel cell system according to the present embodiments, the attaching and detaching device is positioned between the junction of the hydrogen supplying delivery pipe with the circulatory delivery pipe and the opening and closing valve so that the hydrogen cylinder can be selectively attached to and detached from the fuel cell. Thus, even though the hydrogen gases within the hydrogen cylinder are not completely exhausted, the opening and closing valve can be brought to the closing position at a proper and convenient time and the hydrogen cylinder can be exchanged for new one. Additionally, the residual hydrogen gases in the hydrogen cylinder can be used together with hydrogen gases newly charged into the hydrogen cylinder, while the hydrogen gases in the anode closing circulating system can be used for generating the electric power as described above. As a result, the hydrogen gases are not wasted. Also, the fuel cell system is convenient because the exchange time of the hydrogen cylinder can be decided with much time.

The description above further discloses that another constructive feature of the fuel cell system of the present embodiment is that the circulatory delivery pipe has a circulating pump operated under control of the power supply system control device compulsively supply the not-reacted hydrogen within the circulatory delivery pipe from the hydrogen supplying delivery pipe to the fuel cell so as to make the fuel cell generate the electric power. Thereby, the not-reacted hydrogen gases can be effectively circulated between the downstream portion of the hydrogen supplying delivery pipe located downstream more than the opening and closing valve and the circulatory delivery pipe. The power generation that is not wasted thus can be efficiently made.

A further preferred constructive feature of the fuel cell system of the present embodiments is that the system further includes a main switch arranged to make an ON-OFF control of an operation of the fuel cell in a normal mode; and an operating device switch arranged to switch an electrifying condition between the fuel cell and the operating device to a connected condition or to a disconnected condition. When the main switch is set to OFF, the operating device switch is set to OFF and the opening and closing valve is brought to the closing position under control of the power supply system control device so that the electric power generated using the not-reacted hydrogen supplied to the fuel cell through the circulatory delivery pipe is charged into the secondary battery.

Thereby, when the main switch is set to OFF and the fuel cell system stops its operation in the normal mode, the operating device stops its operation and no electric power is consumed by the operating device and the electric power generated by the fuel cell is charged into the secondary battery. Also, when the main switch is set to OFF, the opening and closing valve is brought to the closing position and the hydrogen cylinder and the fuel cell are disconnected from each other. Therefore, no hydrogen gases are newly supplied to the fuel cell from the hydrogen cylinder, and the hydrogen gases residing in the downstream portion of the hydrogen supplying delivery pipe located downstream more than the opening and closing valve is used for generating the electric power that is charged into the secondary battery. The secondary battery thus can be charged without wasting the hydrogen gases. The electric power charged into the secondary battery is properly used as the auxiliary power of the fuel cell.

A further preferred constructive feature of the fuel cell system of the present embodiments is that the system further includes a voltage measuring device for measuring voltage of the fuel cell. After the main switch and the operating device switch are set to OFF and the electric power generated using the hydrogen supplied to the fuel cell through the circulatory delivery pipe is charged into the secondary battery and when an amount of voltage of the fuel cell measured by the voltage measuring device becomes lower than a predetermined threshold, an operation of the circulating pump stops and the fuel cell stops generating the electric power under control of the power supply system control device.

In general, if the fuel cell is stopped generating the electric power under a high voltage condition, the life time thereof can be shorter. However, by the feature, the power generation by the fuel cell is stopped with the circulating pump being stopped when the amount of voltage measured by the voltage measuring device is lower than the threshold. The fuel cell thus can have a long life. Additionally, the threshold on this occasion can be properly decided and can be set to, for example, approximately three volts.

A further preferred constructive feature of the fuel cell system of the present embodiments is that the system further includes a pressure measuring device positioned in a downstream portion of the hydrogen supplying delivery pipe located downstream more than the junction thereof with the circulatory delivery pipe. After the main switch and the operating device switch are set to OFF and the electric power generated using the hydrogen supplied to the fuel cell through the circulatory delivery pipe is charged into the secondary battery and when an amount of pressure within the hydrogen supplying delivery pipe measured by the pressure measuring device is lower than a predetermined threshold, an operation of the circulating pump stops and the fuel cell stops generating the electric power under control of the power supply system control device.

Thereby, the power generation by the fuel cell continues until the hydrogen gases residing in the downstream portion of the hydrogen supplying delivery pipe located downstream more than the opening and closing valve and in the circulatory delivery pipe becomes lower than a predetermined amount. The hydrogen gases are not wasted, accordingly. The threshold on this occasion can be properly decided. Preferably, the threshold is generally set to, for example, the atmospheric pressure.

A further preferred constructive feature of the fuel cell system of the present embodiments is that the system further includes a voltage measuring device for measuring voltage of the fuel cell, and a pressure measuring device positioned in a downstream portion of the hydrogen supplying delivery pipe located downstream more than the junction thereof with the circulatory delivery pipe. After the main switch and the operating device switch are set to OFF and the electric power generated using the hydrogen supplied to the fuel cell through the circulatory delivery pipe is charged into the secondary battery and when an amount of voltage of the fuel cell measured by the voltage measuring device is lower than a predetermined threshold and an amount of pressure within the hydrogen supplying delivery pipe measured by the pressure measuring device is lower than a predetermined threshold, an operation of the circulating pump stops and the fuel cell stops generating the electric power under control of the power supply system control device.

According to the feature, in case that a residual amount of the hydrogen gases in the downstream portion of the hydrogen supplying delivery pipe located downstream more than the opening and closing valve and the circulatory delivery pipe is larger than the predetermined although an amount of the voltage of the fuel cell measured by the voltage measuring device becomes lower than the predetermined threshold; or an amount of the voltage of the fuel cell is higher than the predetermined threshold although an amount of the pressure in the hydrogen supplying delivery pipe measured by the pressure measuring device becomes lower than the predetermined threshold, the fuel cell still generates the electric power. Therefore, according to the present invention, the hydrogen gases can be used without being wasted, while the fuel cell keeping a long life.

A further preferred constructive feature of the fuel cell system of the present embodiments is that the system further includes a secondary battery switch arranged to switch an electrifying condition between the fuel cell and the secondary battery to a connected condition or to a disconnected condition. When the operation of the circulating pump stops and the fuel cell stops generating the electric power that is charged into the secondary battery, the secondary battery switch is set to OFF under control of the power supply system control device. Thereby, the charge to the secondary battery can be surely stopped.

A further preferred constructive feature of the fuel cell system of the present embodiments is that the system is provided for an electric vehicle. Thereby, the electric vehicle can be obtained in which a hydrogen cylinder thereof can be exchanged at a proper time without discharging the hydrogen gases outside even though the hydrogen gases within the hydrogen cylinder is not exhausted.

The description above further discloses, as a preferred first aspect, a fuel cell system comprising: a fuel cell configured to generate electric power by making hydrogen gases supplied from a hydrogen cylinder through a hydrogen supplying delivery pipe and oxygen gases supplied from an oxygen supply device through an oxygen supplying delivery pipe react with each other; an operating device operating by the electric power which the fuel cell generates; a secondary battery into which the electric power generated by the fuel cell is capable of being charged; a circulatory delivery pipe for returning the hydrogen which has been sent from the hydrogen cylinder to the fuel cell and has not reacted to the hydrogen supplying delivery pipe from the fuel cell; and a power supply system control device, wherein an opening and closing valve for selectively opening and closing the hydrogen supplying delivery pipe under control of the power supply system control device is positioned in an upstream portion of the hydrogen supplying delivery pipe located upstream more than a junction thereof with the circulatory delivery pipe so that the not-reacted hydrogen returned to the hydrogen supplying delivery pipe through the circulatory delivery pipe is capable of being exhausted by the opening and closing valve being brought to a closing position under control of the power supply system control device, and an attaching and detaching device is positioned between the junction of the hydrogen supplying delivery pipe with the circulatory delivery pipe and the opening and closing valve so that the hydrogen cylinder is capable of being selectively attached to and detached from the fuel cell.

Further, according to a preferred second aspect, the circulatory delivery pipe has a circulating pump operated under control of the power supply system control device to compulsively supply the not-reacted hydrogen within the circulatory delivery pipe from the hydrogen supplying delivery pipe to the fuel cell so as to make the fuel cell generate the electric power.

Further, according to a preferred third aspect, the fuel cell system further comprises: a main switch arranged to make an ON-OFF control of an operation of the fuel cell in a normal mode; and an operating device switch arranged to switch an electrifying condition between the fuel cell and the operating device to a connected condition or to a disconnected condition, wherein, when the main switch is set to OFF, the operating device switch is set to OFF and the opening and closing valve is in the closing position under control of the power supply system control device so that the electric power generated using the not-reacted hydrogen supplied to the fuel cell through the circulatory delivery pipe is charged into the secondary battery.

Further, according to a preferred fourth aspect, the fuel cell system further comprises: a voltage measuring device for measuring voltage of the fuel cell, wherein, after the main switch and the operating device switch are set to OFF and the electric power generated using the hydrogen supplied to the fuel cell through the circulatory delivery pipe is charged into the secondary battery and when an amount of voltage of the fuel cell measured by the voltage measuring device becomes lower than a predetermined threshold, an operation of the circulating pump stops and the fuel cell stops generating the electric power under control of the power supply system control device.

Further, according to a preferred fifth aspect, the fuel cell system further comprises: a pressure measuring device positioned in a downstream portion of the hydrogen supplying delivery pipe located downstream more than the junction thereof with the circulatory delivery pipe, wherein, after the main switch and the operating device switch are set to OFF and the electric power generated using the hydrogen supplied to the fuel cell through the circulatory delivery pipe is charged into the secondary battery and when an amount of pressure within the hydrogen supplying delivery pipe measured by the pressure measuring device is lower than a predetermined threshold, an operation of the circulating pump stops and the fuel cell stops generating the electric power under control of the power supply system control device.

Further, according to a preferred sixth aspect, the fuel cell system further comprises: a voltage measuring device for measuring voltage of the fuel cell, and a pressure measuring device positioned in a downstream portion of the hydrogen supplying delivery pipe located downstream more than the junction thereof with the circulatory delivery pipe, wherein, after the main switch and the operating device switch are set to OFF and the electric power generated using the hydrogen supplied to the fuel cell through the circulatory delivery pipe is charged into the secondary battery and when an amount of voltage of the fuel cell measured by the voltage measuring device is lower than a predetermined threshold and an amount of pressure within the hydrogen supplying delivery pipe measured by the pressure measuring device is lower than a predetermined threshold, an operation of the circulating pump stops and the fuel cell stops generating the electric power under control of the power supply system control device.

Further, according to a preferred seventh aspect, the fuel cell system further comprises: a secondary battery switch arranged to switch an electrifying condition between the fuel cell and the secondary battery to a connected condition or to a disconnected condition, wherein, when the operation of the circulating pump stops and the fuel cell stops generating the electric power that is charged into the secondary battery, the secondary battery switch is set to OFF under control of the power supply system control device.

Further, according to a preferred eighth aspect, an electric vehicle having the fuel cell system is provided according to one of the preferred first to seventh aspects.

The description above still further discloses, as a particularly preferred embodiment, in order to provide a fuel cell system whose hydrogen cylinder can be exchanged in a state in which hydrogen gases within a hydrogen cylinder is not exhausted without the hydrogen gases being discharged outside, a fuel cell system S including a fuel cell 25 configured to generate electric power by making hydrogen gases supplied from a hydrogen cylinder 31 and oxygen gases supplied from an air blower 37 react with each other, a drive motor 43 operating by the electric power which the fuel cell 25 generates, a secondary battery 26 into which the electric power generated by the fuel cell 25 can be charged, a gas delivery pipe 32b for returning hydrogen gases which have not yet reacted and are discharged from the fuel cell 25 to the gas delivery pipe 32a, and a power supply system control device 50. A main shutting valve 33b is positioned in the gas delivery pipe 32a so that the gas delivery pipe 32a is closed. Also, a connector 31a is positioned between a junction of the gas delivery pipe 32a with the gas delivery pipe 32b and the main shutting valve 33b so that the hydrogen cylinder 31 can be selectively attached to and detached from the fuel cell 25.

## Claims

1. Method of controlling a fuel cell system of a vehicle, in particular of a straddle-type vehicle, said fuel cell system generating electrical power by making hydrogen gas supplied from a hydrogen container via a hydrogen supplying delivery pipe and oxygen gas react with each other for operating an operating device, said method comprising the steps of:
• determining a stop condition of the operating device;
• electrically disconnecting the operating device from the fuel cell;
• closing an opening/closing valve provided in the hydrogen supplying delivery pipe;
• continue generation of electrical power by providing hydrogen residing in the hydrogen supplying delivery pipe in a downstream portion of the opening and closing valve to the fuel cell to react with oxygen.

2. Fuel cell system for a vehicle, in particular a straddle-type vehicle, comprising:
a fuel cell (25) configured to generate electric power for an operating device (42) by making hydrogen gases supplied from a hydrogen cylinder (31) through a hydrogen supplying delivery pipe (32a) and oxygen gases supplied from an oxygen supply device (37) through an oxygen supplying delivery pipe (38a,38b) react with each other;
a secondary battery (26) into which the electric power generated by the fuel cell (25) is capable of being charged;
a circulatory delivery pipe (32b) for returning hydrogen, which has been sent from the hydrogen cylinder (31) to the fuel cell (25) and has not reacted to the hydrogen supplying delivery pipe (32a), from the fuel cell (25);
wherein an opening and closing valve (33b) for selectively opening and closing the hydrogen supplying delivery pipe (32a) under control of a power supply system control device (50) is positioned in an upstream portion of the hydrogen supplying delivery pipe (32a) located upstream more than a junction thereof with the circulatory delivery pipe (32b) such that, when the opening and closing valve (33b) is brought to a closing position under control of the power supply system control device, not-reacted hydrogen can be returned to the hydrogen supplying delivery pipe (32a) through the circulatory delivery pipe (32b) to be capable of being exhausted.

3. Fuel cell system according to claim 2, further comprising an attaching and detaching device (31a) positioned between the junction of the hydrogen supplying delivery pipe (32a) with the circulatory delivery pipe (32b) and the opening and closing valve (33b) so that the hydrogen cylinder (31) is capable of being selectively attached to and detached from the fuel cell (25).

4. Fuel cell system according to claim 2 or 3, wherein the circulatory delivery pipe (32b) has a circulating pump (34b) operated under control of the power supply system control device (50) to compulsively supply the not-reacted hydrogen within the circulatory delivery pipe (32b) from the hydrogen supplying delivery pipe (32a) to the fuel cell (25) so as to make the fuel cell (25) generate the electric power.

5. Fuel cell system according to one of the claims 2 to 4, further comprising: a main switch (SW) arranged to make an ON-OFF control of an operation of the fuel cell (25) in a normal mode; and an operating device switch (SW2) arranged to switch an electrifying condition between the fuel cell (25) and the operating device (43) to a connected condition or to a disconnected condition, wherein, when the main switch (SW) is set to OFF, the operating device switch (SW2) is set to OFF and the opening and closing valve (33b) is in the closing position under control of the power supply system control device (50) so that the electric power generated using the not-reacted hydrogen supplied to the fuel cell (25) through the circulatory delivery pipe (32b) is charged into the secondary battery (26).

6. Fuel cell system according to claim 5, further comprising: a voltage measuring device for measuring voltage of the fuel cell (25); wherein, after the main switch (SW) and the operating device switch (SW2) are set to OFF and the electric power generated using the hydrogen supplied to the fuel cell (25) through the circulatory delivery pipe is charged into the secondary battery (26) and when an amount of voltage of the fuel cell (25) measured by the voltage measuring device becomes lower than a predetermined threshold, an operation of the circulating pump (34b) stops and the fuel cell (25) stops generating the electric power under control of the power supply system control device (50).

7. Fuel cell system according to claim 5 or 6, further comprising: a pressure measuring device positioned in a downstream portion of the hydrogen supplying delivery pipe (32a) located downstream more than the junction thereof with the circulatory delivery pipe (32b), wherein, after the main switch (SW) and the operating device switch (SW2) are set to OFF and the electric power generated using the hydrogen supplied to the fuel cell (25) through the circulatory delivery pipe (32b) is charged into the secondary battery (26) and when an amount of pressure within the hydrogen supplying delivery pipe (32a) measured by the pressure measuring device is lower than a predetermined threshold, an operation of the circulating pump (34b) stops and the fuel cell (25) stops generating the electric power under control of the power supply system control device (50).

8. Fuel cell system according to one of the claims 2 to 7, further comprising: a secondary battery switch (SW1) arranged to switch an electrifying condition between the fuel cell (25) and the secondary battery (26) to a connected condition or to a disconnected condition, wherein, when the operation of the circulating pump (34b) stops and the fuel cell stops generating the electric power that is charged into the secondary battery (26), the secondary battery switch (SW1) is set to OFF under control of the power supply system control device (50).

9. Electric vehicle having the fuel cell system according to one of the claims 2 to 8.
